# EUROPEAN PATENT SPECIFICATION

(11) **EP 2 798 179 B1**
(45) Date of publication and mention of the grant of the patent: **20.02.2019**
(21) Application number: 12861833.7
(22) Date of filing: 20.12.2012
(51) Int. Cl.: F02D 19/08, F02D 19/06, F02D 41/40, F02D 41/00, F02M 37/00

(54) **ARRANGEMENT AND METHOD FOR ESTIMATING A FUEL MIXTURE'S CONTENT OF A SUPPLEMENTARY FUEL**
ANORDNUNG UND VERFAHREN ZUR SCHÄTZUNG EINES KRAFTSTOFFGEMISCHGEHALTES EINES ZUSÄTZLICHEN BRENNSTOFFES
SYSTÈME ET PROCÉDÉ POUR ESTIMER LA TENEUR EN COMBUSTIBLE SUPPLÉMENTAIRE D'UN MÉLANGE CARBURANT

(30) Priority: 28.12.2011 SE 1151279
(43) Date of publication of application: 05.11.2014
(73) Proprietor: Scania CV AB, 151 87 Södertälje (SE)
(72) Inventor: HÄLLEBERG, Roger, S-131 46 Nacka (SE)
(74) Representative: Scania CV AB
(86) International application number: PCT/SE2012/051443
(87) International publication number: WO 2013/100844

(56) References cited:
- EP-A1- 1 873 378
- EP-A1- 2 014 908
- WO-A1-2009/056402
- DE-A1-102009 000 070
- DE-A1-102010 035 722
- GB-A- 2 470 725
- JP-A- 2010 001 772
- US-A- 4 619 240
- US-A1- 2008 035 119
- US-A1- 2008 264 394

## Description

### BACKGROUND TO THE INVENTION AND PRIOR ART

The present invention relates to an arrangement and a method for estimating a fuel mixture's content of a supplementary fuel according to the preambles of claims 1 and 10.

Diesel fuel comprises of late a mixture of conventional diesel oil and FAME (fatty acid methyl ester). FAME is a generic name for renewable diesel fuel based mainly on vegetable oils as raw materials. The commonest raw material is rapeseed oil, which can be esterified to rapeseed methylester (RME). RME is thus a form of FAME. Diesel fuel in Sweden currently contains 7% of FAME, but has different FAME contents in other countries. In particular, vehicles driven across national boundaries may thus be run on diesel fuels which have varying FAME contents.

The characteristics of diesel fuel which contains FAME are different from those of conventional diesel oil. How different they are depends on how much FAME the fuel contains. Diesel fuel containing FAME will for example differ from conventional diesel oil in ignition temperature, energy content and vaporisation temperature. These characteristics affect the engine's combustion process, the post-treatment of the exhaust gases, and the motor oil.

Diesel fuel is usually injected at very high pressure into the combustion spaces of a diesel engine. A so-called "common rail" system is widely used to make such injection possible. A common rail system comprises a high-pressure pump which pumps fuel at very high pressure to an accumulator tank (the common rail). The pressure in the tank may be up to 2000 bar during operation. The fuel in the tank is injected into the engine's cylinders by means of electronic injectors. An electrical control unit substantially continuously calculates the amount of fuel to be supplied to the respective cylinders on the basis of various parameters such as engine load and engine speed. It also receives information from a pressure sensor about the prevailing pressure in the tank. It uses its knowledge of the pressure in the tank to control the opening periods for the electronic injectors so that the calculated amount of fuel is supplied with good accuracy to the combustion spaces of the respective cylinders.

SE 518 924 refers to a method and a device for estimating the quality of a fuel by detecting the movement of a valve in a valve unit during a closing phase to a value which is significant for the fuel's energy content. The amount of fuel injected in the engine is controlled on the basis of said value

US2008/0035119A1 describes a system and method for determining an ethanol content of a fuel by comparing the bulk modulus and a pressure perturbation signature.

WO2013/100844A1 describes a method for determining the fuel type of a fuel present in the fuel system. It relies on the comparison between the pressure drop during injection of the fuel and a pressure drop of a reference fuel.

### SUMMARY OF THE INVENTION

The object of the present invention is to propose an arrangement and a method for estimating a fuel mixture's content of a supplementary fuel in connection with the burning of the mixture in a combustion engine.
This object is achieved with the arrangement of the kind mentioned in the introduction which is characterised by the features indicated in the characterising part of claim 1.
The invention uses an injection system whereby the fuel mixture is pressurised by a high-pressure pump and is led to an accumulator tank before being injected into the engine. By means of a pressure sensor in the tank it is possible to estimate the increase in the pressure of the mixture therein when the high-pressure pump is running. This pressure increase is related to the mixture's density, viscosity, compressibility etc., all of which may in many cases be relatively different between two miscible fuels. When mixtures with different contents of a supplementary fuel are pressurised in a high-pressure pump, there is a clearly measurable pressure difference. According to the invention, the pressure increase of the mixture after it has been pressurised by the high-pressure pump is determined. According to the invention, the control unit has access to information about a corresponding pressure increase value for a reference mixture which has a known content of the supplementary fuel. By comparing the fuel mixture's pressure increase after it has been pressurised by the high-pressure pump with the reference mixture's pressure increase the control unit can relate the fuel mixture's pressure increase to that for the reference mixture. If the fuel mixture's pressure increase is approximately the same as the reference mixture's pressure increase, the fuel mixture's content of the supplementary fuel will be similar to that of the reference mixture. If the fuel mixture's pressure increase is greater or smaller than that of the reference mixture, the fuel mixture will have a higher or lower content of the supplementary fuel than the reference mixture. If for example the fuel mixture's pressure increase is greater than that of the reference mixture, the fuel mixture will have a higher content of the supplementary fuel than the reference mixture if an increased content of the supplementary fuel results in a greater pressure increase.

To achieve as good an estimate as possible of the fuel mixture's content of the supplementary fuel it is appropriate to conduct the estimation in defined operating situations. The control unit is adapted to conducting said estimation in situations where the high-pressure pump pressurises a substantially maximum volume of the fuel mixture while at the same time no fuel is injected into the engine. This results in a maximum pressure increase in the accumulator tank and consequent potential for estimating the fuel mixture's content of the supplementary fuel with optimum accuracy. With a maximum volume a 100% full pump stroke in a piston pump has a geometrically well-defined volume.

In one embodiment of the present invention, the control unit is adapted to providing information about corresponding pressure changes within said period of time for two or more reference mixtures with different known contents of the supplementary fuel. This enables the control unit to estimate contents of the supplementary fuel more accurately. It may for example estimate here that the fuel mixture's content of the supplementary fuel is between its known contents in two reference mixtures. Alternatively it may estimate a more closely defined value for the content of the supplementary fuel in the fuel mixture. This enables the control unit to use the magnitude of the ratio or difference between the pressure increase on the fuel mixture and the pressure increase on the reference mixture to make a thus more accurate estimate of the fuel mixture's content of the supplementary fuel.

In one embodiment of the present invention, the control unit is adapted to providing information about the pressure change on the reference mixture from previously running the engine on it. Even if they are of the same type, two high-pressure pumps will not have exactly the same characteristics. Those of an older high-pressure pump may also have changed somewhat since it was new. In situations where a fuel mixture has a well-defined content of the supplementary fuel, the control unit may store reference values for the pressure increase in different operating conditions for the specific high-pressure pump which pressurises the fuel mixture. This may be done at regular intervals, enabling the control unit to always have access to relevant pressure increase values achieved with the high-pressure pump on a reference mixture. Alternatively, or in combination, more general pressure increase values for one or more reference mixtures related to a certain type of high-pressure pump may be available to the control unit.

According to the invention, said period of time is a continuous period during which the high-pressure pump pressurises the fuel mixture. A high-pressure pump may be so configured that it pressurises the fuel mixture intermittently, enabling the control unit to compare the fuel mixture's pressure increase over such a period of time with values for the reference mixture's pressure increase over a similar period of time with a similar high-pressure pump. According to the invention, the high-pressure pump is a piston pump and the period may be how long it takes to subject the fuel mixture to one compression stroke. Alternatively, the period may be related to two or more compression strokes or to the piston pump's rotation speed. A piston pump raises the fuel mixture's pressure during the compression stroke, whereas its pressure remains constant or becomes somewhat lower in the accumulator tank during the pump's return stroke. The high-pressure pump adds to the tank a substantially similar amount of the fuel mixture to that injected into the engine.
In another preferred embodiment of the present invention, the control unit is adapted to controlling the engine on the basis of information about the fuel mixture's estimated content of the supplementary fuel. The mixture's characteristics will vary with its content of the supplementary fuel, which affects inter alia the combustion process, the post-treatment of the engine's exhaust gases, and the motor oil. In this case the control unit thus estimates the mixture's content of the supplementary fuel before it is to be injected into the engine. It can use this information to conduct specific control of the engine according to the mixture's content of the supplementary fuel so that the combustion process, the post-treatment of the engine's exhaust gases and the motor oil assume desired characteristics substantially irrespective of the mixture's content of the supplementary fuel.
In another preferred embodiment of the present invention, the control unit is adapted to estimating the mixture's content of the supplementary fuel in defined operating states of the engine. It is neither appropriate nor possible in all operating situations to estimate this content. As the mixture may substantially only on the occasion of refuelling undergo a marked change in its content of the supplementary fuel, it may be sufficient to estimate it after each refuelling or only in situations where the vehicle is refuelled with a mixture which has an unknown content of the supplementary fuel.

In another preferred embodiment of the present invention, the control unit is adapted to estimating a diesel fuel mixture's content of a supplementary fuel. Diesel fuel currently usually contains conventional diesel oil and some form of biodiesel as supplementary fuel. Biodiesel is a propellant which is similar to diesel fuel and consists not of petroleum products but of long chains of alkyl esters. It is made by transesterification of vegetable oils or animal fats and may be used alone or mixed with conventional diesel oil. The control unit may here be adapted to estimating the fuel mixture's content of the supplementary fuel FAME. FAME is a generic name for biodiesel based mainly on vegetable oils as raw materials. One form of FAME is RME made from rapeseed oil, methanol and potassium hydroxide.

The object indicated above is also achieved with the method of the kind mentioned in the introduction which is characterised by the features indicated in the characterising part of claim 10.

### BRIEF DESCRIPTION OF THE DRAWINGS

Preferred embodiments of the invention are described below by way of examples with respect to the attached drawings, in which
- Fig. 1: depicts an arrangement for estimating a diesel fuel mixture's content of FAME,
- Fig. 2: is a diagram with curves showing how the pressure may vary over time in an accumulator tank for two diesel fuel mixtures with different contents of FAME, and
- Fig. 3: is a flowchart illustrating a method according to the present invention.

### DETAILED DESCRIPTION OF PREFERRED EMBODIMENTS OF THE INVENTION

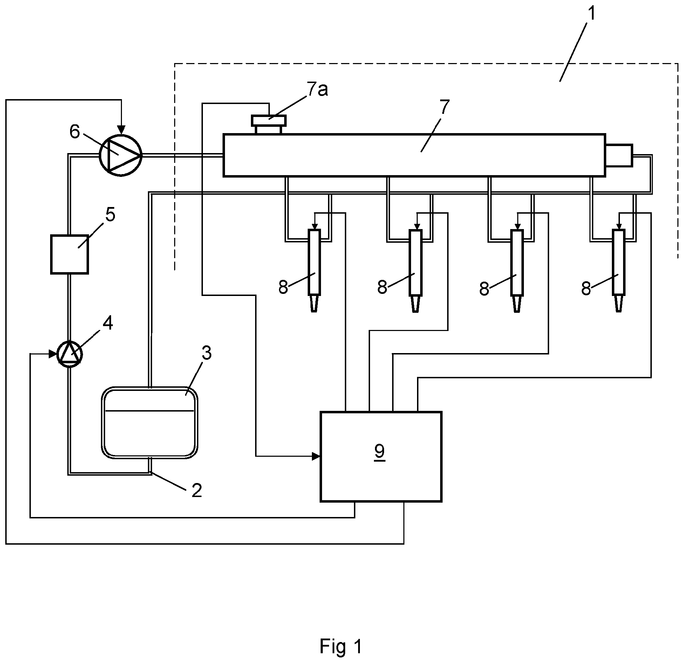

Fig. 1 depicts a fuel injection system for a combustion engine in the form of a schematically indicated diesel engine 1. The injection system and the engine are with advantage fitted in a heavy vehicle. The injection system is a so-called "common rail" system and comprises a fuel line 2 for supplying fuel from a fuel tank 3 to the engine's cylinders. The fuel is in this case a diesel fuel mixture consisting of conventional diesel oil and FAME. FAME is a propellant made by transesterification of vegetable oils or animal fats. It is biologically degradable and non toxic. A fuel pump 4 is provided in the fuel line 2 to convey fuel from the fuel tank 3 to a high-pressure pump 6 via a filter 5. The high-pressure pump is adapted to pressurising the fuel so that it is fed at high pressure into an accumulator tank 7 in the form of a so-called common rail. The high-pressure pump contains a piston which pressurises the fuel during a compression stroke. The high pressure in the accumulator tank serves as a driving force to make it possible to inject fuel at high pressure into the engine's respective cylinders. To control the injection of the fuel, an injection means 8 is provided at each of the connections between the accumulator tank and the respective cylinders. When an injection means is put into an open state, it injects fuel at high pressure into the respective cylinders. An electrical control unit 9 is adapted to controlling the operation of the fuel pump 4, the high-pressure pump 6 and the injection means 8. A pressure sensor 7a is fitted in the accumulator tank to monitor the pressure therein and send signals containing information about pressure values monitored to the control unit 9.

When the engine 1 is started, the control unit 9 activates the fuel pump 4 and the high-pressure pump 6 so that fuel is fed at high pressure into the accumulator tank 7. At the same time, the control unit activates the injection means 8 so that fuel is injected at high pressure into the engine's respective cylinders from the common accumulator tank. During operation of the engine, the control unit substantially continuously receives control signals about parameters such as engine load and engine speed. It uses this information to calculate the amount of fuel which needs to be supplied to the engine's cylinders. At the same time, it receives information from the pressure sensor 7a about the momentary pressure in the accumulator tank. Knowing the desired amount of fuel and the pressure in the tank enables the control unit to regulate the opening periods for the respective injection means so that an optimum amount of fuel is supplied to each of the engine's cylinders at a correct time.

Although FAME may be described as a diesel fuel, its characteristics are different from conventional diesel oil. It has for example a higher combustion temperature, lower energy content and higher vaporisation temperature than conventional diesel oil. The fuel mixture which undergoes combustion in the engine 1 will therefore have a combustion temperature, energy content and vaporisation temperature which vary with the fuel mixture's content of FAME. Operating the engine involves endeavouring inter alia to give it high efficiency, reduce the formation of emissions during the combustion process, give the exhaust gases a suitable temperature with a view to their optimum cleaning, e.g. in an oxidation catalyst, SCR catalyst, particle filter etc., and keep the motor oil at a temperature such that fuel which inevitably becomes mixed with it is vaporised. During diesel refuelling in different countries the FAME content of the fuel may vary. In a conventional injection system, the control unit is adapted to controlling the injection into a diesel engine of a fuel mixture which has a predetermined FAME content. If the mixture's FAME content is higher or lower, the desired characteristics referred to above will not be achieved in an optimum way.

The density, viscosity and compressibility of FAME also differ from those of conventional diesel oil, with the result that it reaches a higher pressure than conventional diesel oil when a similar volume of each is compressed.

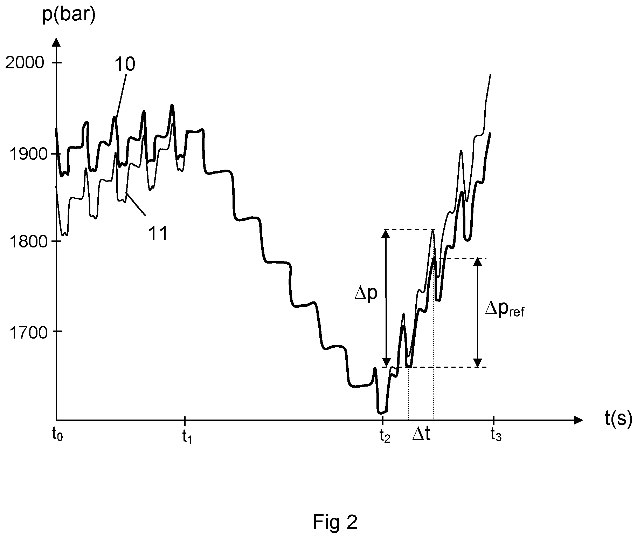

Fig. 2 represents by a bold continuous line 10 how the pressure p in the accumulator tank 7 may vary in different operating states of the engine 1 on a reference mixture which contains a known FAME content x, and a lighter continuous line 11 representing how the pressure in the accumulator tank varies during similar operation of the engine with a fuel mixture which has a higher FAME content x. During a first period of time from t₀ to t₁ the pressure in the tank rises. In this situation not all of the swept volume of the high-pressure pump 6 is utilised to pressurise the fuel in the tank. At time t₀ the fuel mixture is at a lower pressure than the reference mixture at a similar time. Increasing pressure in the accumulator tank occurs during the high-pressure pump's compression stroke, whereas the pressure is substantially constant or decreases somewhat during the high-pressure pump's return stroke. The temporary pressure drops in the accumulator tank are substantially due to fuel being injected into the engine.

At time t₁ the fuel mixture and the reference mixture are at the same pressure. It may thus be found that the pressure of the fuel mixture has increased by more than that of the reference mixture over the period t₀ to t₁. At time t₁ a highest acceptable pressure level is reached in the accumulator tank. The control unit therefore causes the high-pressure pump to only perform a relatively small amount of work during the period t₁ to t₂. The pressure here drops stepwise as per curve 10 on both the fuel mixture in the accumulator tank and the reference mixture. Curves 10 and 11 coincide over this period. At time t₂ a lowest acceptable pressure level in the tank is reached. Over a third period t₂ to t₃ the pressure in the tank rises very quickly. In this situation the whole of the high-pressure pump's swept volume is utilised to pressurise the fuel in the tank while at the same time no fuel is injected into the engine. Here the control unit can determine the pressure increase Δp for each compression stroke of the high-pressure pump on the basis of information from the pressure sensor 7a. The compression stroke takes place during a period Δt which is related to the speed of the high-pressure pump. The control unit may have information on the pressure increase Δp₀ stored for the reference mixture over a period Δt in a similar operating situation. It will with advantage have obtained this information during previous running of the engine on a fuel mixture which had a known FAME content. Alternatively, the control unit may in some other way have access to suitable pressure increase values Δp₀ for a reference mixture.

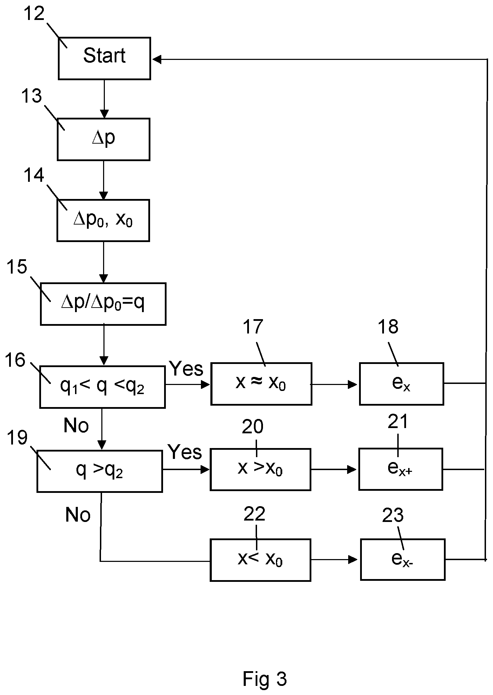

Fig. 3 is a flowchart illustrating an example of a method for estimating the FAME content of a fuel mixture, starting at step 12. To estimate the FAME content of a fuel mixture as accurately as possible it is appropriate to compare the pressure increase Δp for the fuel mixture and the pressure increase for the reference fuel when they are both at as large values as possible. Maximum pressure increases Δp₀ for the fuel mixture occur in an operating situation where the whole swept volume of the high-pressure pump is utilised to pressurise the mixture while at the same time no fuel is fed out from the accumulator tank to the engine. Such a situation is depicted in Fig. 2 over the period t₂ to t₃. The method starts with advantage when such a situation occurs for a first time after the vehicle has been refuelled. This may take place automatically or be initiated by a driver of the vehicle using a suitable button or the like when he/she knows or suspects that the fuel mixture has a different content from the reference mixture. At step 13, such a situation occurs and the control unit receives pressure values p from the pressure sensor 7a for the pressure in the accumulator tank. The control unit uses the pressure values p received to determine the pressure increase Δp over the period Δt, which thus corresponds to the amount of time of one compression stroke of the high-pressure pump. With advantage, an average value of the pressure increase Δp is determined over a succession of consecutive compression strokes in order to determine the pressure increase Δp with optimum accuracy.

At step 14, the control unit receives information about a corresponding pressure increase Δp₀ over the period Δt for the reference mixture. As indicated above, this information may be based on previous running of the engine on the reference mixture which has a known FAME content x₀, e.g. 7%, the FAME content of the diesel fuel at present used in Sweden. At step 15, the control unit calculates the ratio q between the pressure increase Δp on the fuel mixture and the pressure increase Δp₀ on the reference mixture. Alternatively, the difference may be determined between the pressure increase values. At step 16, the control unit determines whether the ratio q is within a range defined by a lower limit value q₁ which is somewhat smaller than 1 and an upper limit value q₂ which is somewhat greater than 1. If the pressure increase Δp on the fuel mixture corresponds fully to the pressure increase Δp₀ on the reference mixture, the ratio q will be equal to 1. If it is within the range q₁ to q₂, the control unit will find at step 17 that the fuel mixture in the accumulator tank has substantially the same FAME content x₀ as the reference mixture. At step 18 the control unit causes similar injection and operation eₓ₀ of the engine on the fuel mixture as on the reference mixture. The method then starts again at step 12 the next time the vehicle is refuelled.

If the ratio q between the pressure increase Δp on the fuel mixture and the pressure increase Δp₀ is not within the range q₁ to q₂, the method moves on to step 19 for the control unit to estimate whether the ratio q is greater than the upper limit value q₂. If such is the case, it will be found at step 20 that the pressure increase Δp on the fuel mixture is clearly greater than the pressure increase Δp₀ on the reference mixture. This means that the fuel mixture's FAME content x is clearly higher than the reference mixture's FAME content x₀. At step 21, the control unit causes injection of the fuel mixture and operation eₓ₊ of the engine so that desired operating characteristics are achieved on a fuel mixture which has a higher FAME content than the reference mixture. The method then starts again at step 12 the next time the vehicle is refuelled.

If the ratio q between the fuel mixture's pressure increase Δp and the reference mixture's pressure increase Δp₀ is not greater than q₂, the control unit will find that the ratio must be smaller than the lower limit value q₁. The fuel mixture's pressure increase Δp is thus clearly less than the reference mixture's pressure increase Δp₀. At step 22 it is found that the fuel mixture's FAME content x is lower than the reference mixture's FAME content x₀. At step 23, the control unit causes injection of the fuel mixture and operation eₓ₋ of the engine so that desired running characteristics are achieved with a fuel mixture which has a lower FAME content than the reference mixture. The method then starts again at step 12 the next time the vehicle is refuelled. The present invention makes it possible to achieve optimum running characteristics substantially irrespective of the FAME content of the fuel mixture.

The invention is in no way restricted to the embodiments to which the drawings refer but may be varied freely within the scopes of the claims.

## Claims

1. An arrangement for estimating the content of a supplementary fuel in a fuel mixture on which a combustion engine (1) is run, which engine (1) is provided with a fuel injection system which comprises a fuel line (2) for supplying fuel to the engine, a high-pressure pump (6) adapted to pressurising the fuel in the fuel line (2), an accumulator tank (7) adapted to receiving and storing fuel from the high-pressure pump (6) at high pressure, a pressure sensor (7a) adapted to monitoring the pressure in the accumulator tank (7), and injection means (8) adapted to injecting the pressurised fuel contained in the accumulator tank (7) into the engine's respective combustion spaces, wherein the arrangement comprises a control unit (9) adapted to
- determining the pressure change (Δp) in the accumulator tank (7) within a period of time (Δt) on the basis of pressure values from the pressure sensor (7a),
- providing information about a corresponding pressure change (Δp₀) on a reference mixture with a known content of the supplementary fuel within a similar period of time (Δt) and
- estimating the fuel mixture's content of the supplementary fuel by comparing the pressure change (Δp) on the fuel mixture with the pressure change (Δp₀) on the reference mixture,
**characterised in that** the high-pressure pump is a piston pump (6) and that the control unit (9) is adapted to
- conducting said estimation in operating situations where the high-pressure pump (6) pressurises a maximum volume of the fuel mixture while at the same time no fuel is injected into the engine (1) and
- define said period of time (Δt) as a continuous period during which the high-pressure piston pump (6) subjects the fuel mixture to one or several compression stroke(s).

2. An arrangement according to claim 1, **characterised in that** the control unit (9) is adapted to providing information about corresponding pressure changes (Δp₀) on two or more reference mixtures with different known contents of the supplementary fuel within a corresponding period of time (Δt).

3. An arrangement according to claim 1 or 2, **characterised in that** the control unit (9) is adapted to providing information about the pressure change (Δp₀) on the reference mixture from previously running the engine (1) on it.

4. An arrangement according to any one of the foregoing claims, **characterised in that** the control unit (9) is adapted to controlling the engine (1) on the basis of information about the fuel mixture's estimated content of the supplementary fuel.

5. An arrangement according to any one of the foregoing claims, **characterised in that** the control unit (9) is adapted to estimating the fuel mixture's content of the supplementary fuel in defined operating states of the engine (1).

6. An arrangement according to any one of the foregoing claims, **characterised in that** the control unit is adapted to estimating a diesel fuel mixture's content of a supplementary fuel.

7. An arrangement according to claim 8, **characterised in that** the control unit is adapted to estimating the diesel fuel mixture's content of the supplementary fuel FAME.

8. A method for estimating the content of a supplementary fuel in a fuel mixture on which a combustion engine (1) is run, which engine (1) is provided with a fuel injection system which comprises a fuel line (2) for supplying fuel to the engine, a high-pressure pump (6) adapted to pressurising the fuel in the fuel line (2), an accumulator tank (7) adapted to receiving and storing fuel from the high-pressure pump (6) at high pressure, a pressure sensor (7a) adapted to monitoring the pressure in the accumulator tank (7), and injection means (8) adapted to injecting the pressurised fuel contained in the accumulator tank (7) into the engine's respective combustion spaces, comprising the steps of
- determining the pressure change (Δp) in the accumulator tank (7) within a period of time (Δt) on the basis of pressure values from the pressure sensor (7a),
- providing information about a corresponding pressure change (Δp₀) on a reference mixture with a known content of the supplementary fuel within a similar period of time (Δt) and
- estimating the fuel mixture's content of the supplementary fuel by comparing the pressure change (Δp) on the fuel mixture with the pressure change (Δp₀) on the reference mixture,
**characterised in** the steps of
- conducting said estimation in operating situations where the high-pressure pump is a piston pump and (6) pressurises a maximum volume of the fuel mixture while at the same time no fuel is injected into the engine (1),
- defining the period of time (Δt) as how long the high-pressure pump (6) takes to subject the fuel mixture to one or several compression stroke(s).

9. A method according to claim 8, **characterised by** providing information about corresponding pressure changes (Δp₀) on two or more reference mixtures with different known contents of the supplementary fuel within a corresponding period of time (Δt).

10. A method according to claim 8 or 9, **characterised by** the step of providing information about the pressure change (Δp₀) on the reference mixture from previously running the engine (1) on it.

11. A method according to claims 8 to 10, **characterised by** the step of controlling the engine (1) on the basis of information about the fuel mixture's estimated content of the supplementary fuel.

12. A method according to claims 8 to 11, **characterised by** the step of estimating the fuel mixture's content of a supplementary fuel in defined operating states of the engine (1).

13. A method according to claims 8 to 12, **characterised by** the step of estimating a diesel fuel mixture's content of a supplementary fuel.

14. A method according to claim 13, **characterised by** the step of estimating the diesel fuel mixture's content of the supplementary fuel FAME.

## Patentansprüche

1. Anordnung zum Schätzen des Gehalts eines ergänzenden Kraftstoffs in einer Kraftstoffmischung, mit welcher ein Verbrennungsmotor (1) betrieben wird, wobei der Motor (1) mit einem Kraftstoffeinspritzsystem versehen ist, welches eine Kraftstoffleitung (2) zum Bereitstellen von Kraftstoff für den Motor, eine Hochdruckpumpe (6), die dazu eingerichtet ist, den Kraftstoff in der Kraftstoffleitung (2) unter Druck zu setzen, einen Sammeltank (7), der dazu eingerichtet ist, Kraftstoff von der Hochdruckpumpe (6) bei hohem Druck zu empfangen und zu speichern, einen Drucksensor (7a), der dazu eingerichtet ist, den Druck in dem Sammeltank (7) zu überwachen, und Einspritzmittel (8) umfasst, die dazu eingerichtet sind, den unter Druck gesetzten Kraftstoff, der in dem Sammeltank (7) enthalten ist, in die entsprechenden Brennräume des Motors einzuspritzen, wobei die Anordnung eine Steuereinheit (9) umfasst, die dazu eingerichtet ist:
- die Druckänderung (Δp) in dem Sammeltank (7) innerhalb eines Zeitintervalls (Δt) auf der Grundlage von Druckwerten von dem Drucksensor (8a) zu bestimmen,
- Information über eine entsprechende Druckänderung (Δp₀) an einer Referenzmischung mit einem bekannten Gehalt an ergänzendem Kraftstoff innerhalb eines ähnlichen Zeitintervalls (Δt) bereitzustellen und
- den Gehalt an ergänzendem Kraftstoff der Kraftstoffmischung durch Vergleichen der Druckänderung (Δp) an der Kraftstoffmischung mit der Druckänderung (Δp₀) an der Referenzmischung zu schätzen,
**dadurch gekennzeichnet, dass** die Hochdruckpumpe eine Kolbenpumpe (6) ist und dadurch, dass die Steuereinheit (9) dazu eingerichtet ist
- die Schätzung in Betriebssituationen durchzuführen, in denen die Hochdruckpumpe (6) ein maximales Volumen der Kraftstoffmischung unter Druck setzt, während zugleich kein Kraftstoff in den Motor (1) hinein eingespritzt wird und
- das Zeitintervall (Δt) als ein kontinuierliches Intervall zu definieren, während dessen die Hochdruck-Kolbenpumpe (6) die Kraftstoffmischung einem oder mehreren Kompressionstakten aussetzt.

2. Anordnung gemäß Anspruch 1, **dadurch gekennzeichnet, dass** die Steuereinheit (9) dazu eingerichtet ist, Information über entsprechende Druckänderungen (Δp₀) an zwei oder mehr Referenzmischungen mit unterschiedlichen bekannten Gehalten des ergänzenden Kraftstoffs innerhalb eines entsprechenden Zeitintervalls (Δt) bereitzustellen.

3. Anordnung gemäß Anspruch 1 oder 2, **dadurch gekennzeichnet, dass** die Steuereinheit (9) dazu eingerichtet ist, Information über die Druckänderung (Δp₀) an der Referenzmischung von einem vorherigen Betreiben des Motors (1) mittels dieser bereitzustellen.

4. Anordnung gemäß einem der vorhergehenden Ansprüche, **dadurch gekennzeichnet, dass** die Steuereinheit (9) dazu eingerichtet ist, den Motor (1) auf der Grundlage von Information über den geschätzten Gehalt an ergänzendem Kraftstoff der Kraftstoffmischung zu steuern.

5. Anordnung gemäß einem der vorhergehenden Ansprüche, **dadurch gekennzeichnet, dass** die Steuereinheit (9) dazu eingerichtet ist, den Gehalt an ergänzendem Kraftstoff der Kraftstoffmischung in festgelegten Betriebszuständen des Motors (1) zu schätzen.

6. Anordnung gemäß einem der vorhergehenden Ansprüche, **dadurch gekennzeichnet, dass** die Steuereinheit dazu eingerichtet ist, einen Gehalt eines ergänzenden Kraftstoffs einer Diesel-Kraftstoffmischung zu schätzen.

7. Anordnung gemäß Anspruch 6, **dadurch gekennzeichnet, dass** die Steuereinheit dazu eingerichtet ist, den Gehalt an ergänzendem Kraftstoff FAME der Diesel-Kraftstoffmischung zu schätzen.

8. Verfahren zum Schätzen des Gehalts eines ergänzenden Kraftstoffs in einer Kraftstoffmischung, mit welcher ein Verbrennungsmotor (1) betrieben wird, wobei der Motor (1) mit einem Kraftstoffeinspritzsystem versehen ist, welches eine Kraftstoffleitung (2) zum Bereitstellen von Kraftstoff für den Motor, eine Hochdruckpumpe (6), die dazu eingerichtet ist, den Kraftstoff in der Kraftstoffleitung (2) unter Druck zu setzen, einen Sammeltank (7), der dazu eingerichtet ist, Kraftstoff von der Hochdruckpumpe (6) bei hohem Druck zu empfangen und zu speichern, einen Drucksensor (7a), der dazu eingerichtet ist, den Druck in dem Sammeltank (7) zu überwachen, und Einspritzmittel (8) umfasst, die dazu eingerichtet sind, den unter Druck gesetzten Kraftstoff, der in dem Sammeltank (7) enthalten ist, in die entsprechenden Brennräume des Motors einzuspritzen, umfassend die Schritte:
- Bestimmen der Druckänderung (Δp) in dem Sammeltank (7) innerhalb eines Zeitintervalls (Δt) auf der Grundlage von Druckwerten von dem Drucksensor (8a),
- Bereitstellen von Information über eine entsprechende Druckänderung (Δp₀) an einer Referenzmischung mit einem bekannten Gehalt an ergänzendem Kraftstoff innerhalb eines ähnlichen Zeitintervalls (Δt) und
- Schätzen des Gehalts an ergänzendem Kraftstoff der Kraftstoffmischung durch Vergleichen der Druckänderung (Δp) an der Kraftstoffmischung mit der Druckänderung (Δp₀) an der Referenzmischung,
**gekennzeichnet durch** die Schritte:
- Durchführen der Schätzung in Betriebssituationen, in denen die Hochdruckpumpe (6) ein maximales Volumen der Kraftstoffmischung unter Druck setzt, während zugleich kein Kraftstoff in den Motor (1) hinein eingespritzt wird und
- Definieren des Zeitintervalls (Δt) als ein kontinuierliches Intervall, während dessen die Hochdruck-Kolbenpumpe (6) die Kraftstoffmischung einem oder mehreren Kompressionstakten aussetzt.

9. Verfahren gemäß Anspruch 8, **gekennzeichnet durch** ein Bereitstellen von Information über entsprechende Druckänderungen (Δp₀) an zwei oder mehr Referenzmischungen mit unterschiedlichen bekannten Gehalten des ergänzenden Kraftstoffs innerhalb eines entsprechenden Zeitintervalls (Δt).

10. Verfahren gemäß Anspruch 8 oder 9, **gekennzeichnet durch** den Schritt eines Bereitstellens von Information über die Druckänderung (Δp₀) an der Referenzmischung von einem vorherigen Betreiben des Motors (1) mittels dieser.

11. Verfahren gemäß Ansprüchen 8 bis 10, **gekennzeichnet durch** den Schritt eines Steuerns des Motors (1) auf der Grundlage von Information über den geschätzten Gehalt an ergänzendem Kraftstoff der Kraftstoffmischung.

12. Verfahren gemäß Ansprüchen 8 bis 11, **gekennzeichnet durch** den Schritt eines Schätzens des Gehalts an ergänzendem Kraftstoff der Kraftstoffmischung in festgelegten Betriebszuständen des Motors (1).

13. Verfahren gemäß Ansprüchen 8 bis 12, **gekennzeichnet durch** den Schritt eines Schätzens eines Gehalts eines ergänzenden Kraftstoffs einer Diesel-Kraftstoffmischung zu schätzen.

14. Verfahren gemäß Anspruch 13, **gekennzeichnet durch** den Schritt eines Schätzens des Gehalts an ergänzendem Kraftstoff FAME der Diesel-Kraftstoffmischung.

## Revendications

1. Système d'estimation de la teneur en carburant supplémentaire d'un mélange carburant à l'aide duquel un moteur à combustion interne (1) fonctionne, lequel moteur (1) est doté d'un système d'injection de carburant comprenant une conduite d'alimentation en carburant (2) destinée à alimenter le moteur en carburant, une pompe haute pression (6) conçue pour pressuriser le carburant dans la conduite d'alimentation en carburant (2), un réservoir accumulateur (7) conçu pour recevoir et stocker du carburant provenant de la pompe haute pression (6) à haute pression, un capteur de pression (7a) conçu pour surveiller la pression dans le réservoir accumulateur (7), et des moyens d'injection (8) conçus pour injecter le carburant pressurisé contenu dans le réservoir accumulateur (7) dans les espaces de combustion respectifs du moteur, le système comprenant une unité de commande (9) conçue pour
- déterminer la variation de pression (Δp) dans le réservoir accumulateur (7) sur un laps de temps (Δt) en fonction des valeurs de pression du capteur de pression (7a),
- fournir des informations relatives à une variation de pression (Δp₀) correspondante sur un mélange de référence ayant une teneur en carburant supplémentaire connue pendant un laps de temps (Δt) similaire et
- estimer la teneur en carburant supplémentaire du mélange carburant en comparant la variation de pression (Δp) sur le mélange carburant à la variation de pression (Δp₀) sur le mélange de référence,
**caractérisé en ce que** la pompe haute pression est une pompe à piston (6) et **en ce que** l'unité de commande (9) est conçue pour
- réaliser ladite estimation dans des situations de fonctionnement où la pompe haute pression (6) pressurise un volume maximal du mélange carburant alors qu'aucun carburant n'est simultanément injecté dans le moteur (1) et
- définir ledit laps de temps (Δt) comme une période continue pendant laquelle la pompe à piston à haute pression (6) soumet le mélange carburant à au moins une phase de compression.

2. Système selon la revendication 1, **caractérisé en ce que** l'unité de commande (9) est conçue pour fournir des informations relatives à des variations de pression (Δp₀) correspondantes sur au moins deux mélanges de référence ayant différentes teneurs en carburant supplémentaire connues pendant un laps de temps (Δt) correspondant.

3. Système selon la revendication 1 ou 2, **caractérisé en ce que** l'unité de commande (9) est conçue pour fournir des informations relatives à la variation de pression (Δp₀) sur le mélange de référence du fait de son utilisation antérieure dans le moteur (1).

4. Système selon l'une quelconque des revendications précédentes, **caractérisé en ce que** l'unité de commande (9) est conçue pour commander le moteur (1) sur la base d'informations relatives à la teneur en carburant supplémentaire estimée du mélange carburant.

5. Système selon l'une quelconque des revendications précédentes, **caractérisé en ce que** l'unité de commande (9) est conçue pour estimer la teneur en carburant supplémentaire du mélange carburant dans des états de fonctionnement définis du moteur (1).

6. Système selon l'une des revendications précédentes, **caractérisé en ce que** l'unité de commande est conçue pour estimer la teneur en carburant supplémentaire d'un mélange carburant diesel.

7. Système selon la revendication 8, **caractérisé en ce que** l'unité de commande est conçue pour estimer la teneur en carburant supplémentaire EMAG du mélange carburant diesel.

8. Procédé d'estimation de la teneur en carburant supplémentaire d'un mélange carburant à l'aide duquel un moteur à combustion interne (1) fonctionne, lequel moteur (1) est doté d'un système d'injection de carburant qui comprend une conduite d'alimentation en carburant (2) destinée à alimenter le moteur en carburant, une pompe haute pression (6) conçue pour pressuriser le carburant dans la conduite d'alimentation en carburant (2), un réservoir accumulateur (7) conçu pour recevoir et stocker le carburant provenant de la pompe haute pression (6) à haute pression, un capteur de pression (7a) conçu pour surveiller la pression dans le réservoir accumulateur (7), et des moyens d'injection (8) conçus pour injecter le carburant pressurisé contenu dans le réservoir accumulateur (7) dans les espaces de combustion respectifs du moteur, comprenant les étapes consistant à
- déterminer la variation de pression (Δp) dans le réservoir accumulateur (7) pendant un laps de temps (Δt) en fonction des valeurs de pression du capteur de pression (7a),
- fournir des informations relatives à la variation de pression (Δp₀) correspondante sur un mélange de référence ayant une teneur en carburant supplémentaire connue pendant un laps de temps (Δt) similaire et
- estimer la teneur en carburant supplémentaire du mélange carburant en comparant la variation de pression (Δp) sur le mélange carburant à la variation de pression (Δp₀) sur le mélange de référence,
**caractérisé par** les étapes consistant à
- réaliser ladite estimation dans des situations de fonctionnement où la pompe haute pression est une pompe à piston (6) et pressurise un volume maximal du mélange carburant alors qu'aucun carburant n'est simultanément injecté dans le moteur (1),
- définir le laps de temps (Δt) en fonction du temps nécessaire à la pompe haute pression (6) pour soumettre le mélange carburant à au moins une phase de compression.

9. Procédé selon la revendication 8, **caractérisé par** la fourniture d'informations relatives à des variations de pression (Δp₀) correspondantes sur au moins deux mélanges de référence ayant différentes teneurs en carburant supplémentaire connues pendant un laps de temps (Δt) correspondant.

10. Procédé selon la revendication 8 ou 9, **caractérisé par** l'étape consistant à fournir des informations relatives à la variation de pression (Δp₀) sur le mélange de référence du fait de son utilisation antérieure dans le moteur (1).

11. Procédé selon les revendications 8 à 10, **caractérisé par** l'étape consistant à commander le moteur (1) sur la base d'informations relatives à la teneur en carburant supplémentaire estimative du mélange carburant.

12. Procédé selon les revendications 8 à 11, **caractérisé par** l'étape consistant à estimer la teneur en carburant supplémentaire du mélange carburant dans des états de fonctionnement définis du moteur (1).

13. Procédé selon les revendications 8 à 12, **caractérisé par** l'étape consistant à estimer la teneur en carburant supplémentaire du mélange carburant.

14. Procédé selon la revendication 13, **caractérisé par** l'étape consistant à estimer la teneur en carburant supplémentaire EMAG du mélange carburant.
